Europäisches Patentamt

European Patent Office

Office européen des brevets

(11) Publication number: **0 114 480**

**A1**

(12) **EUROPEAN PATENT APPLICATION**

(21) Application number: **83307622.7**

(22) Date of filing: **15.12.83**

(51) Int. Cl.³: **C 03 B 40/02**

(30) Priority: **18.12.82 GB 8236079**

(43) Date of publication of application:
**01.08.84 Bulletin 84/31**

(84) Designated Contracting States:
**DE FR IT**

(71) Applicant: **Redfearn National Glass PLC**
**Fishergate**
**York Y01 4AD(GB)**

(72) Inventor: **Johnson, Steven**
**31 Allendale Road Darton, Barnsley**
**South Yorkshire(GB)**

(72) Inventor: **Kent, Roger**
**134 Causeway Head Road Dore, Sheffield**
**South Yorkshire(GB)**

(74) Representative: **Geldard, David Guthrie**
**URQUHART-DYKES AND LORD 11th Floor, Tower House**
**Merrion Way**
**Leeds, LS2 8PB West Yorkshire(GB)**

(54) **Spray system.**

(57) A spray system for spraying lubricant into an open topped glass forming mould located on a glass forming machine, when the mould is in its closed position. A nozzle (28) is carried on a support (26) movable between advanced and retracted positions, the nozzle being in communication with a source of lubricant and of compresed air. The nozzle is so arranged that when the support is in the advanced position the nozzle is capable of spraying a lubricant into the mould cavity (12), the apparatus being controlled so that no spraying occurs during normal glass forming cycles of the machine and spraying is effected in place of a glass forming cycle once every preset plurality of cycles.

Fig.3.

Croydon Printing Company Ltd.

- 1 -

SPRAY SYSTEM

This invention relates to a spray system, in particular for glass blank moulds, and to a method of lubricating such moulds.

When blown glass ware, for example bottles, is manufactured using a moulding system it is normal to provide two sets of moulds. The first, the blank mould, receives the unformed gob of molten glass and forms it to the approximate shape of the final article. This semi formed object, known as a parison, is removed from the blank mould and placed in the second mould for final shaping. Air under pressure is used to form the molten glass within both the blank and the final mould. In order to ensure smooth operation of the process, both the blank and the final mould need to be lubricated periodically, usually with a graphite based liquid lubricant. This is commonly carried out manually with the machine operator dipping a lubricant soaked swab into the mould. This is unsatisfactory for several reasons. Firstly, the operator must time his swabbing to fit in with the machine cycle and often he has only a very short interval in which to complete swabbing. Secondly, the operator must work in amongst the movaing machinery. Thirdly, manual swabbing of the inside of the mould surface rarely produces an even coating of lubricant.

For all the above reasons it would be extremely desirable to provide an automatic lubricating system for glass forming moulds, and there have been several proposals to this end. However, all of them suffer from one or more defects in practice, and none of the proposals to date have provided a commercially acceptable automatic lubricating system.

The invention seeks to provide an automatic lubrication system improved in the above respects.

According to the present invention there is provided a spray system for spraying lubricant into an open topped glass forming mould located on a glass forming machine, when the mould is in its closed position, the system comprising at least one nozzle carried on a support movable between advanced and retracted positions, the nozzle being in communication with a source of lubricant and of compressed air, and the nozzle being so arranged that when the support is in the advanced position the nozzle is capable of spraying a lubricant into the mould cavity, the apparatus being controlled so that no spraying occurs during normal glass forming cycles of the machine and spraying is effected in place of a glass forming cycle once every preset plurality of cycles.

Gob delivery in the preset spraying cycle may be inhibited or, more preferably, the gob may be diverted to waste.

The most commonly used machine in the manufacture of glass containers is the IS machine manufactured by Emhart Corporation of the United States of America. In the operation of this machine, measured gobs of molten glass are delivered to a blank mould, where a parison is formed by blowing or pressing, the parison being subsequently transferred to a blow mould for final forming. This type of machine may be provided with a funnel associated with each blank mould which, once in every cycle of the machine, is swung from a retracted position into an advanced position over its respective blank mould so as to guide the gob of molten glass into the mould cavity. A preferred form of the invention utilises as the nozzle support the funnel supporting arm of this type of machine and replaces each funnel with a spray nozzle. Operation of the support arm is desirably retimed, so that it only moves to its advanced position once every preset number of cycles, and spraying is effected when in that position. Alternatively support movement could occur once each cycle, with spraying being controlled so that it only occurs once every plurality of cycles. It has been surprisingly found that the removal of the gob guiding funnel does not result in any loss of machine efficiency, particularly if the gob delivery is accurately aligned at the start of each production run. Thus, the invention requires very little modification to existing machines and, if for any reason it is desired to change back to funnel operation, this can also be done simply and quickly. In some machines where the parison is pressed into shape by a plunger acting in the mould, the mould itself incorporates a funnel, and the funnel supporting arm is not used during the normal cycle. Obviously, the funnel supporting arm is then the optimum nozzle support.

Although replacement of the funnel is a particularly convenient way of applying the invention to an IS machine it will be apparent that the nozzle support need not be a modified funnel support. Thus, the nozzle support may also be a support for a baffle and an air supply providing settle air to the mould. The support will then move to the operating position during each cycle and during normal cycles settle blow air will be provided therefrom. During spray cycles, however, lubricant will be sprayed from the nozzle, and settle

- 4 -

0114480

blow air will not be supplied.

Other means of providing nozzle support may also be utilised.

The invention also provides a method of lubricating glass forming moulds located on a glass forming machine, which comprises sending a signal from a control unit to prevent the supply of a gob to the mould and simultaneously to move a support carrying a spray nozzle or nozzles to lie over the mould cavity while the mould is closed and to spray a predetermined charge of lubricant into the mould cavity, and thereafter retracting the nozzle support and recommencing the normal machine operation cycle.

The correct charge of lubricant can be determined empirically for a given production run. Furthermore, spraying can be controlled to give anything from a fine spray to a jet of neat lubricant. Combinations can be employed to ensure that sufficient lubricant is applied to all parts of the mould cavity, and in particular to the neck ring which is located at the bottom of the blank mould, since parisons are generally formed upside down.

The lubricant used may be chosen from any of the available mould lubricating compositions currently available.

It will be noted that the method of the invention sprays lubricant into the mould when the latter is closed, that is with both halves in an abutting relationship. There have been proposals for spraying moulds in the open position but this is unsatisfactory since a residue of burnt off lubricants forms on the abutting surfaces, preventing proper mould closure and causing a seam line to appear in the finished article.

A specific embodiment of the invention will now be described by way of example only, with reference to the accompanying drawings in which:-

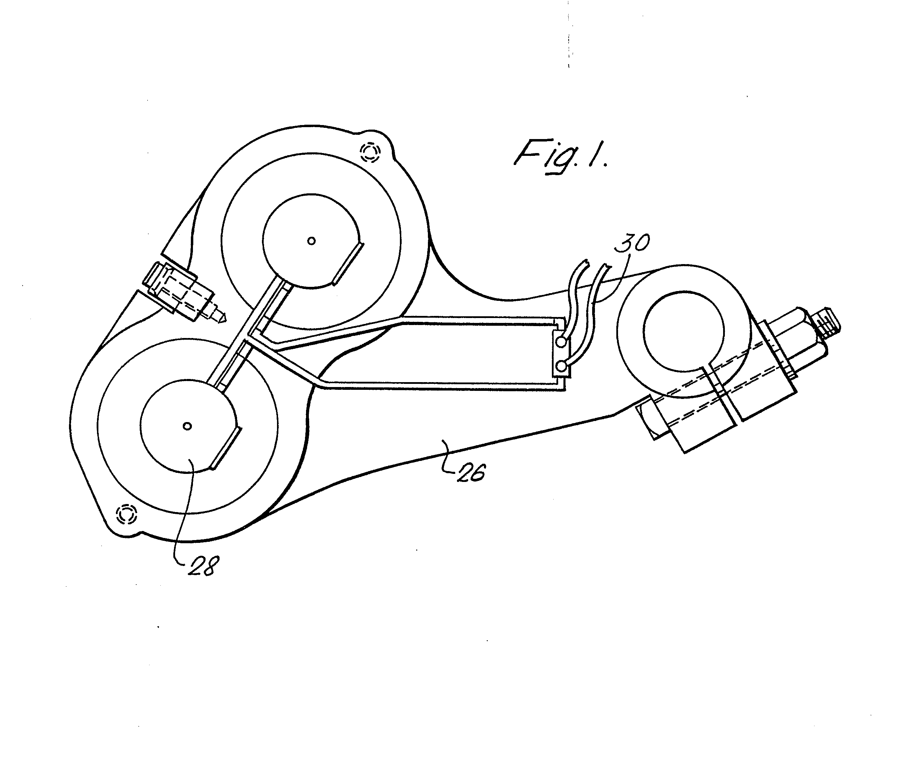

Figure 1 is a plan view of a pair of lubricant nozzles on a support arm;

Figure 2 is a sectional view through a nozzle;

Figure 3 is a diagrammatic general arrangement of the apparatus; and

Figure 4 is a block diagram of the control circuitry.

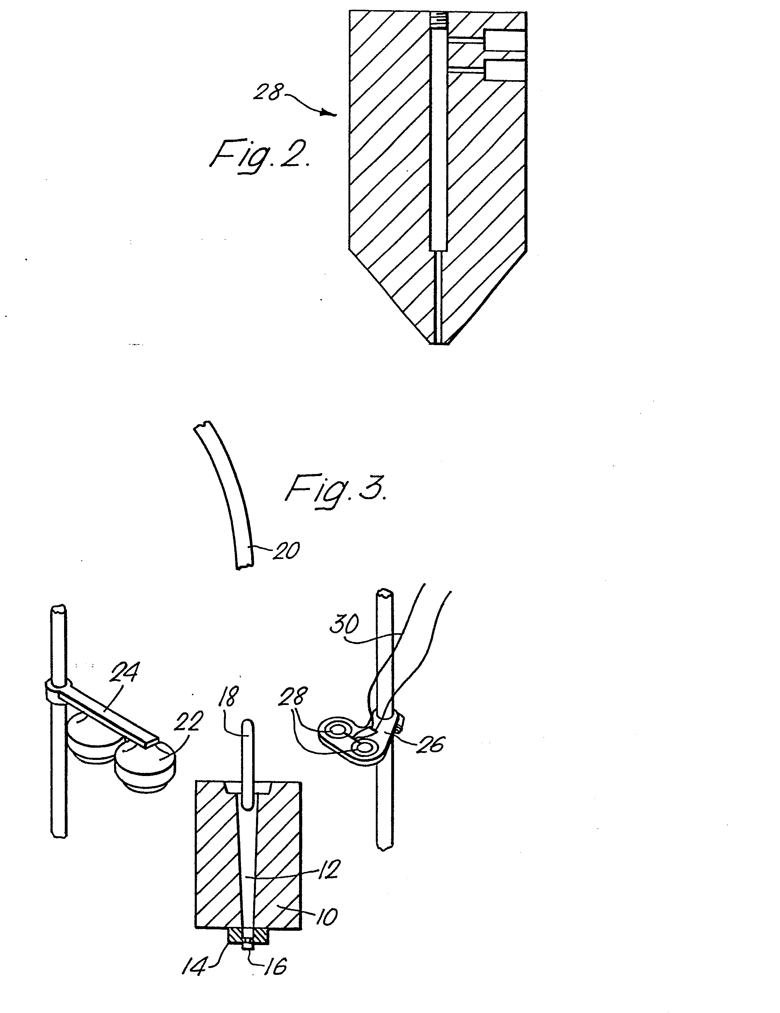

Referring to the drawings, Figure 3 shows a blank mould 10 formed of two mating halves defining a mould cavity 12. At the base of the blank mould 10 there is a neck ring mould 14 also in two halves. A plug 16 is provided to seal the base of the cavity while a gob 18 of glass is charged into the cavity 12. Gobs 18 are supplied, pre-measured, from a furnace by a deflector 20 which is accurately positioned so that the gob passes cleanly into the mould cavity 12. A normal glass forming machine, such as an IS machine, will have a number of sections each carrying a pair of blank moulds 10 side by side. A pair of baffles 22 carried on a baffle support arm 24 may be moved over the moulds 10 to seal the top of each mould cavity 12. A support arm 26 carries nozzles 28 supplied with lubricating oil and with air via pipes 30.

At this point it is helpful to explain the operation of a conventional IS machine. This is generally arranged as illustrated in Figure 3, except that the nozzles 28 would not be there and instead the arm 26 would carry two funnels, one for each of the side by side moulds. Its operation is as follows: the arm 26 swings the funnels into register with the blank moulds 10 and gobs 18 are charged through the funnels into the mould cavities 12. The baffles 22 are swung into place above the funnels on the baffle supporting arm 24 and compressed air (known as "settle" air) is provided through suitable channels in the baffle and blown through the funnels to press the gobs 18 into the cavities 12. The arm 24 is retracted, and the arm 26 is then retracted, removing the funnels from the tops of the mould cavities. The arm 24 is then brought back into place to position the baffles directly over the mould cavities, so sealing them. The plug 16 is removed and blowing air applied to the base of the blank moulds 10 to form the parisons, after which the mould halves are opened and the parisons removed to blow moulds for final forming.

In the operation of the modified apparatus of the present invention, the nozzle supporting arm 26 is programmed to remain in its retracted position, away from the moulds 10, during normal glass forming cycles of the apparatus. This results in a simplified sequence of operations, since the gobs 18 are charged into the cavities 12 and the baffles 22 arethen immediately placed on top of the blank moulds 10. Baffles having an air valve are employed to allow a charge of settle air to be introduced into each cavity 12. Then, without removing the baffles 22, the blow air can be charged from below as before to produce the parisons. Thus, the baffles are only moved into and out of position once instead of twice as in the cycle of the unmodified machine. This results in significantly reduced baffle wear.

When lubrication is required, typically every 15 or 20 minutes in normal speed glass production, operation of the baffle support arm 24 is interrupted, and no gobs 18 are delivered for one cycle. Gob delivery may be inhibited, or gobs delivered from the furnace directed to waste prior to reaching the deflector. During this cycle, the nozzle support arm 26 is moved to place the nozzles over the respective blank moulds 10 and a timed spray of lubricant is charged into the mould cavities 12. The plugs 16 may or, preferably, may not be present to close the lower part of the mould, during the spraying operation. Thereafter, the arm 26 is retracted once again, and the normal production cycles recommence.

It will be appreciated that since no gobs of glass are charged into the moulds during the lubrication cycle no bottles will be formed during this cycle. This means that no parisons will be delivered to the final blow moulds and this gives the operator an opportunity to lubricate the blow moulds either manually, or employing the system of the invention or some other system. If the lubrication cycle for each section of the machine is staggered the operator can lubricate each final blow mould in turn after the relevant blank mould lubrication cycle.

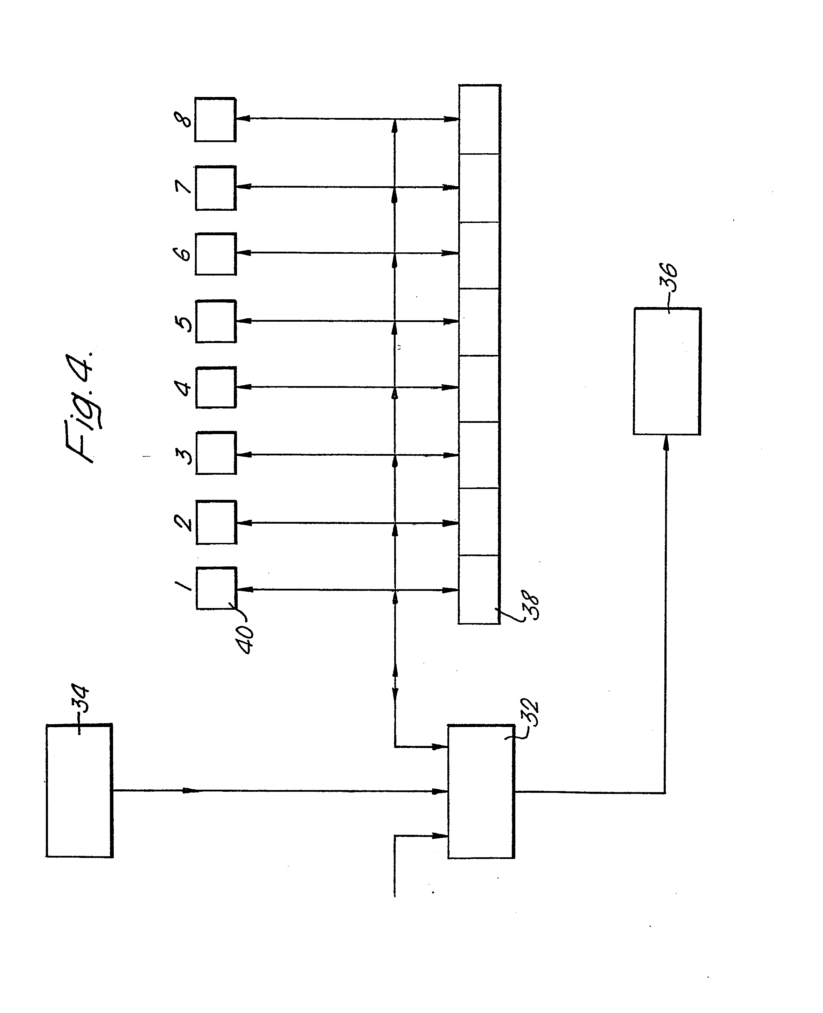

The actual timing of the lubrication cycle is controlled by a spray control box 32 which is linked to a machine timing unit 34 and receives machine cycle pulses on line 35 and so is able to count the number of production cycles and can be set to produce a lubrication cycle every so many production cycles. The spray control box is connected to a gob control unit 36 so as to ensure that gobs 18 are not fed to the mould cavities 12 during the lubrication cycle for those cavities. The spray control box 32 also controls the movement of the nozzle support arms 26 and the feed of lubricating oil and compressed air by means of suitable solenoid valves 38, 40 on each section of the machine, eight sections being illustrated in Figure 4. As mentioned before, the operation of each section in turn can be staggered to allow the machine operator to make use of the fact that no parisons are formed during the lubricating cycle, so allowing lubrication of the associated final moulds. Since the first one or two bottles formed after a lubricating cycle are normally rejected owing to contamination with excess lubricants, lubricating the final mould immediately after the blank mould ensures that the same bottles are contaminated in sequence by both moulds, and therefore only one set of rejects is produced.

In order to ensure full and even lubrication of each mould cavity 12 it is often advantageous to programme the apparatus during the lubricating cycle, so that the plugs 16 are maintained in an open position so that the spray of lubricant can pass completely through the mould cavity 12 and the neck ring 14, ensuring that it reaches all parts of thesurface.

In order to illustrate the invention further, two production runs were carried out on a $4\frac{1}{4}$" IS machine manufacturing 750 ml. whiskey bottles using both conventional manual lubrication, and the spray system of the invention. The results both in terms of machine efficiency and equipment wear are given in the  table below:

## 750 ML. WHISKEY BOTTLE (BLOW-BLOW)

Manual Lubrication

| Day | Daily Efficiency | Speed |
|---|---|---|
| 5 | 77.97 | 92 |
| 6 | 65.21 | 92 |
| 7 | 73.72 | 92 |
| 8 | 74.17 | 92 |
| 9 | 74.79 | 92 |
| 10 | 85.17 | 92 |
| 11 | 84.08 | 92 |

Equipment changes
over this period:      36 blanks      52 rings      30 plugs

Automatic Spray

| Day | Daily Efficiency | Speed |
|---|---|---|
| 1 | 85.30 | 92 |
| 2 | 83.37 | 92 |
| 3 | 82.34 | 92 |
| 4 | 84.58 | 93 |
| 5 | 80.60 | 94 |
| 6 | 79.63 | 94 |
| 7 | 90.20 | 94 |
| 8 | 87.82 | 94 |
| 9 | 89.14 | 94 |
| 10 | 89.67 | 94 |

Equipment changes
over this period:      10 blanks      17 rings      9 plugs

As can be seen from the table above, the efficiency using the spray system of the invention was radically improved and the wear on equipment considerably reduced.

Furthermore, no manual operation was required. Also since accurate metering of the lubricant was possible, lubricant usage was reduced.

It will be understood that modifications are possible. In particular it is not necessary for the lubricant nozzles to be mounted on the arm that was the funnel support arm of the unmodified machine. One clear alternative is to incorporate the spray nozzles with the settle air baffles on arm 24. The control system then controls the apparatus so that during normal mould cycles settle air is supplied from the baffles in the normal way, but that during a lubricating cycle blowing of settle air is replaced by spraying of lubricant.

If both funnels and baffles are thought to be necessary on a machine then the lubricant nozzles can be provided on a support arm that is separate from the funnel and baffle supports and that may be moved into the spraying positions required. Alternatively the lubricant nozzles may be incorporated into the funnel arrangement and timed to operate as required.

The actual configuration of the spray nozzle and its supply may be designed as required, and the timing and control system can take any suitable form.

CLAIMS:

1.    A spray system for spraying lubricant into an open topped glass forming mould located on a glass forming machine, when the mould is in its closed position, the system comprising at least one nozzle carried on a support movable between advanced and retracted positions, the nozzle being in communication with a source of lubricant and of compressed air, and the nozzle being so arranged that when the support is ·in the advanced position the nozzle is capable of spraying a lubricant into the mould cavity, the apparatus being controlled so that no spraying occurs during normal glass forming cycles of the machine and spraying is effected in place of a glass forming cycle one every preset plurality of cycles.

2.    A spray system according to claim 1 in which means are provided for diverting the gob to waste during a spraying cycle.

3.    A spray system according to claim 1 or claim 2 in which the support is the funnel support arm of a conventional glass forming machine.

4.    A spray system according to claim 3 in which the funnel has been removed from the arm.

5.    A spray system according to claim 4 and including means for controlling the arm so that it is advanced only during a spraying cycle.

6.    A spray system according to claim 1 or claim 2 in which the support is the baffle support arm of a conventional glass forming machine.

7.    A method of lubricating glass forming moulds located on a glass forming machine, which comprises sending a signal from a control unit to prevent the supply of a gob to the mould, and simultaneously to move a support carrying a spray nozzle or nozzles to lie over the mould cavity while the mould is closed and to spray a predetermined charge of lubricant into the the mould cavity, and thereafter retracting the nozzle
support and recommencing the normal machine operation
cycle.

Fig.I.

2|3

Fig.2.

Fig.3.

Fig.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 145 651 (OWENS-ILLINOIS INC.) * Claim 1 * | 1,3 | C 03 B 40/02 |
| X | US-A-3 981 711 (G. BJÖRKSTRÖM) * Claim 1 * | 1,2,7 | |
| A | * Claim 1 * | 5 | |
| A | US-A-3 580 711 (J.R. HAMILTON) * Claims 1, 3, 7, 8 * | 1,3 | |
| A | US-A-3 141 752 (R.H. KELLER) * Claim 1 * | 1,3 | |
| A | US-A-3 623 856 (R.H. KELLER) * Claim 1 * | | TECHNICAL FIELDS SEARCHED (Int. Cl. 3) C 03 B 40/02 |

The present search report has been drawn up for all claims

| Place of search BERLIN | Date of completion of the search 05-03-1984 | Examiner STROUD J.G. |
|---|---|---|